# EUROPÄISCHE PATENTSCHRIFT

(11) **EP 0 313 760 B1**
(45) Veröffentlichungstag und Bekanntmachung des Hinweises auf die Patenterteilung: **27.10.1993**
(21) Anmeldenummer: 88113935.6
(22) Anmeldetag: 26.08.1988
(51) Int. Cl.: B21D 47/01, B21D 11/07, B21D 13/02

(54) **Vorrichtung zum Herstellen von Trägern für Bauzwecke und dergl.**
Apparatus for making structural beams or the like
Appareil pour fabriquer des poutres de construction ou similaires

(30) Priorität: 28.10.1987 DE 3736394
(43) Veröffentlichungstag der Anmeldung: 03.05.1989
(73) Patentinhaber: MASCHINENBAU GEROLD GMBH + CO. KG, D-41334 Nettetal (DE)
(72) Erfinder: Hasenkamp, Friedrich, D-4054 Nettetal 1 (DE)
(74) Vertreter: Türk, Dietmar

(56) Entgegenhaltungen:
- EP-A- 0 232 549
- CH-A- 431 438
- CH-A- 435 183
- DE-A- 1 652 817
- DE-A- 2 060 686
- DE-A- 2 063 041
- DE-B- 1 197 049
- DE-U- 8 614 893
- FR-A- 1 294 242
- GB-A- 921 582
- GB-A- 1 055 164
- GB-A- 1 473 700
- US-A- 4 468 946

## Beschreibung

Die Erfindung betrifft eine Vorrichtung zum Herstellen von Trägern für Bauzwecke und dgl. gemäß dem Oberbegriff des Patentanspruches 1.

Derartige Träger haben beispielsweise zwei parallele aus Flachmaterial oder Bandmaterial bestehende Gurte und einen zwischen diese mit fort laufenden Schweißnähnten eingeschweißten Steg, der in Draufsicht trapezförmig ausgebildet ist (DE-A-8600280.5). Derartige Träger werden beispielsweise dadurch hergestellt, daß man Bandmaterial jeweils von einer Rolle bzw. einem Coil abzieht und die drei Bänder zusammenführt und miteinander verschweißt. Dabei ist es erforderlich, daß das den Steg bildende Bandmaterial vor dem Verschweißen in die gewünschte Trapezform gebracht wird.

Es sind weiter aus Gurten und einer Strebenschlange bestehende Träger sowie eine Vorrichtung zum kontinuierlichen Herstellen solcher Träger bekannt (vergl. CH-A-431 438, die als nächstliegender Stand der Technik angesehen wird), die wenigstens zwei Coil-Abwickeleinrichtungen und eine Formeinrichtung aufweist, mit der ein von einer Coil-Abwickeleinrichtung zulaufendes Bandmaterial schrittweise verformt und danach an ein anderes Band angeschweißt wird, wobei die Formeinrichtung zwei Festhalteeinrichtungen aufweist, von denen die in Vorschubrichtung des zu verformenden Bandmaterials gesehen erste Festhalteeinrichtung relativ verschiebbar zu der feststehenden zweiten Festhalteeinrichtung gelagert ist und wobei beide Festhalteeinrichtungen je zwei aufeinander zu- und voneinander wegbewegbare Halteorgane aufweisen, welche das schrittweise zu verformende Bandmaterial an zwei voneinander entfernten Stellen festhalten können.

Die auf einer solchen Vorrichtung herstellbaren Träger sind jedoch in Bezug auf ihre Formgebung beschränkt, da die Strebenschlange abwechselnd Abschnitte geringer und hoher Biegesteifigkeit aufweisen muß. Träger mit trapezförmig gewellten Stegen können auf einer solchen Vorrichtung nicht hergestellt werden.

Aufgabe der Erfindung ist es, eine Vorrichtung zum Formen eines Trägers für Bauzwecke mit trapezförmigem Steg zu schaffen, wobei ein unkontrolliertes Durchknicken des Bandmaterials verhindert und somit eine sehr exakte Querschnittsform auch bei relativ dicken Bandmaterialien erreicht wird.
Auf diese einfache und zuverlässige Art und Weise kann das den Steg bildende Bandmaterial eines Trägers der eingangs genannten Art unmittelbar vor dem Zusammenschweißen der einzelnen Teile des Trägers in die gewünschte Form gebogen werden.

Diese Aufgabe wird bei einer Vorrichtung der eingangs genannten Gattung dadurch gelöst, daß jede Festhalteeinrichtung als Klemm- und Biegeeinrichtung zum Formen eines trapezförmigen Steges ausgestaltet ist, welche als Halteorgan plattenförmige Klemmbacken und je eine zugeordnete, plattenförmige angetriebene Biegebacke aufweist, wobei je zwei Klemmbacken je einen Trapezabschnitt einklemmen und die zugeordneten Biegebacken je einen der benachbarten und zwischen den eingeklemmten Trapezabschnitten liegenden Trapezabschnitte so abknicken, daß zwischen den abgeknickten Trapezabschnitten noch ein weiterer zu den eingeklemmten Trapezabschnitten paralleler Trapezabschnitt verbleibt.

Dazu ist den Biegebacken beider Klemm- und Biegeeinrichtungen gegenüber und zwischen diesen eine Stützbacke zugeordnet, gegen welche das von den Biegebacken ausgelenkte Bandmaterial gedrückt wird, um die endgültige Querschnittsform des gebogenen Bandmaterials zu bestimmen. Die Stützbacke kann dabei senkrecht zur Vorschubrichtung des zu verformenden Bandmaterials verstellbar und einstellbar gelagert sein, was für eine Einstellung der Größe der zu verformenden Querschnitte günstig ist und außerdem den Vorteil hat, daß die Stützbacke vom verformten Bandmaterial zurückgezogen werden kann, wenn der verformte Materialabschnitt aus dem Bereich der Formeinrichtung wegbewegt wird.

Nach einem Verformvorgang wird das Bandmaterial zum Verformen des nächsten Abschnittes weitertransportiert und an die Gurte angeschweißt.

Die Formeinrichtung hat zwei relativ zueinander verschiebbare Klemmeinrichtungen, welche das schrittweise und abschnittsweise zu verformende Bandmaterial an zwei voneinander entfernten Stellen einklemmen und danach zum Biegen in die gewünschte Form zusammenschieben können. Die erfindungsgemäße Formeinrichtung ist also zum abschnittsweisen Biegen des von ihr erfaßten Bandmaterials ausgelegt, was den Vorteil hat, daß eine sehr exakte Querschnittsform gebogen werden kann und sich keine erheblichen Rückstellungen des verbogenen Bandmaterials ergeben, was bei einem kontinuierlichen Biegen zwischen beispielweise zwei profilierten Walzen nicht zu vermeiden ist. Hinzu kommt, daß die erfindungsgemäße Biegevorrichtung wesentlich weniger Verschleiß ausgesetzt ist als miteinander zusammenwirkende profilierte Rollen oder Walzen, zwischen denen das Bandmaterial verformt wird.

Durch die Einstellung der Länge des Verschiebeweges zwischen den beiden Klemmeinrichtungen läßt sich die Querschnittsform der zu biegenden Trapezquerschnitte einstellen, so daß mit ein und derselben Formeinrichtung unterschiedllch große Träger hergestellt werden können.

Die einzelnen Backen der Klemm- und Biegeeinrichtungen sowie der Stütze können abgerundete Kanten zumindest an deren Stirnenden aufweisen, über welche das zu verformende Material gebogen wird, um im Eckbereich eine Rundung zu erfahren, ohne daß sich eine Materialschwächung im Biegebereich aufgrund eines Tiefziehvorganges einstellen kann. Dabei sind die einzelnen Backen, und zwar sowohl die Klemmbacken als auch die Biegebacken und die Stützbacke, auswechselbar und/oder umsetzbar angeordnet, so daß bei Abnutzung derselben im Bereich einer der abgerundeten Kanten ein Umsetzen erfolgen kann und die betreffenden Backen dementsprechend eine hohe Lebensdauer aufweisen.

Mit der erfindungsgemäßen Vorrichtung kann das beispielsweise in einen trapezförmigen Querschnitt zu verformende Bandmaterial in die gewünschte Querschnittsform gebracht werden, ohne daß sich beim Biegen ein Tiefziehen einstellen kann. Das im Biegebereich befindliche Bandmaterial wird entsprechend dem Biegevorgang gekürzt, wobei die Klemmeinrichtungen keinen hemmenden Zug auf das Bandmaterial ausüben. Daher ist auch eine Rückverformung in störendem Umfang nicht zu befürchten.

In der Zeichnung ist ein Ausführungsbeispiel der erfindungsgemäßen Vorrichtung zum Herstellen von Trägern mit zwei im Abstand voneinander angeordneten parallelen Gurte und einem diese Gurten verbindenden, trapezförmig gewellten Steg schematisch dargestellt, und zwar zeigt
- Fig. 1: eine Seitenansicht der als Anlage konzipierten Vorrichtung,
- Fig. 2: eine im Maßstab vergrößerte Seitenansicht der Formeinrichtung der Vorrichtung aus Figur 1 und
- Fig. 3 bis 5: Seitenansichten der Klemm- und Biegeeinrichtungen der Formeinrichtung aus Figur 2, woraus die einzelnen Arbeitsschritte beim Verformen des zugeführten Bandmaterials zu erkennen sind.

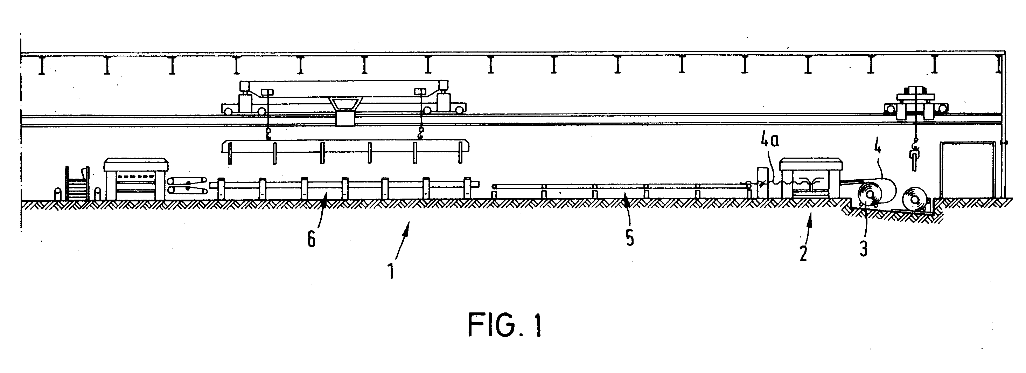

Die in Figur 1 insgesamt dargestellte Vorrichtung (1) hat eine Formeinrichtung (2) für von einem Coil (3) ablaufendes Bandmaterial (4), eine Zusammenführstrecke (5) für das verformte Bandmaterial (4a) und für von zwei weiteren, in der Zeichnung nicht dargestellten Coils ablaufende weitere Bandmaterialien, welche die Gurte des herzustellenden Trägers bilden, während das verformte Bandmaterial (4a) den mittleren Steg dieses Trägers bildet, und ferner eine Schweißstrecke (6), in deren Bereich die drei zusammengeführten Bandmaterialien mit fortlaufenden Schweißnähten zu dem gewünschten Trägermaterial miteinander verbunden werden.

Die Formeinrichtung (2) weist einen schweren Rahmen (7)auf, zwischen dessen Seitenwänden zwei Klemm- und Biegeeinrichtungen ( 8 und 9) gelagert sind.

Jede Klemm- und Biegeeinrichtung weist jeweils zwei übereinander liegende Klemmbacken (10 und 11) auf, und ferner eine Biegebacke (12). Zwischen den beiden Klemm- und Biegeeinrichtungen (8 und 9) ist eine senkrecht zur Vorschubrichtung des Bandmaterials (4) verstellbare Stützbacke (13) vorgesehen.

Alle Backen (10 bis 13) sind plattenförmig ausgebildet und mit abgerundeten Ecken (14) ausgestattet, um beim Biegen des Bandmaterials (4) keine scharfen Kanten entstehen zu lassen.

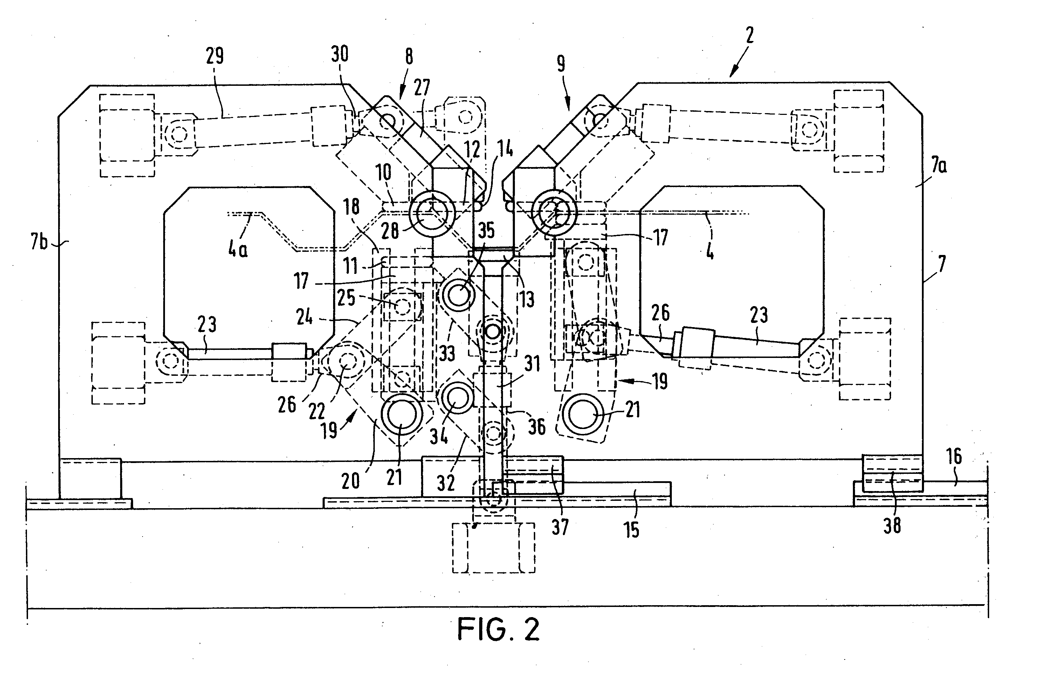

Der in Figur 2 rechts dargestellte und das Einlaufende für das Bandmaterial (4) bildende Rahmenteil (7a) ist auf Schienen (15 und 16) relativ zum links dargestellten Rahmenteil (7b) verschiebbar gelagert , um entsprechend der beim Biegen des Bandmaterials (4) entstehenden Kürzung des Bandmaterials praktisch zugfrei folgen zu können . Eine nicht dargestellte Rückstelleinrichtung wie eine Feder sorgt dafür, daß nach Beendigung jedes Biegevorganges und vor Einleitung des nächsten Biegevorganges der Rahmenteil (7a) in die gewünschte Ausgangsposition zurückkehrt.

Von den Klemmbacken (10 und 11) ist jeweils die obere Klemmbacke (10) feststehend zwischen den Seitenwänden des betreffenden Rahmenteiles (7a) bzw. (7b) angeordnet, während die untere Klemmbacke (11) senkrecht und relativ zur oberen Klemmbacke (10) verstellt werden kann. Zu diesem Zweck ist die untere Klemmbacke (11) auf einem Schlitten (17) befestigt, der zwischen senkrecht verlaufenden Führungsschienen (18) gelagert und mit einem Hebelgetriebe (19) verbunden ist, dessen einer Hebel (20) um eine feststehende Achse (21) von einem an einen Gelenkpunkt (22) angreifenden hydraulischen Stellzylinder (23)verschwenkt werden kann. An den Gelenkpunkt (22) ist ein weiterer Hebel (24) angelenkt, der mittels eines Gelenkstiftes (25) gelenkig mit dem Schlitten (17) verbunden ist. Fährt die Kolbenstange (26) des Zylinders (23)aus, so wird der Gelenkpunkt (22) in Richtung zu den Führungsschienen (18) versetzt und dadurch der Schlitten (17) nach oben geschoben, wie in Figur 2 rechts dargestellt ist. In dem linken Rahmenteil (7b) ist die Kolbenstange (26) hingegen zurückgezogen, so daß sich der Schlitten (17) in der abgesenkten Position befindet.

Jede Biegebacke (12) ist an einem Biegebalken (27) befestigt, der um ein horizontales Gelenk (28) von einem hydraulischen Zylinder (29), dessen Kolbenstange (30) an den Biegebalken (27) angelenkt ist, zwischen der in Figur 2 in vollen und der in Figur 2 in strichpunktierten Linien dargestellen Position verschwenkt werden kann.

Die Stützbacke (13) ist auf einer Stütze (31) befestigt, welche an zwei parallen Hebeln (32 und 33) angelenkt ist, welche jeweils um ein horizontales Gelenk (34) bzw. (35) schwenkbar gelagert sind. Die Gelenke (34 und 35) befinden sich seitlich neben der Stütze (31), so daß die Stützbacke (13) auf einem seitlich gerichteten bogenförmigen Pfad aus der in Figur 2 dargestellten Position nach oben bewegt werden kann, wenn ein hydraulischer Stellzylinder (36) betätigt wird. Somit kann die Stützbacke (13) an die Unterseite des zunächst noch nicht verformten Bandmaterials (4) herangefahren werden und beim Biegevorgang entsprechend dem fortschreitenden Biegen zurückgefahren werden, um während des gesamten Biegevorganges eine Stützfunktion auszuüben und somit einen Biegewiderstand zu liefern.

Der in Figur 2 rechts dargestellte Rahmenteil (7a) ist mittels Gleitschuhen (37 und 38) auf den Schienen (15 und 16) abgestützt.

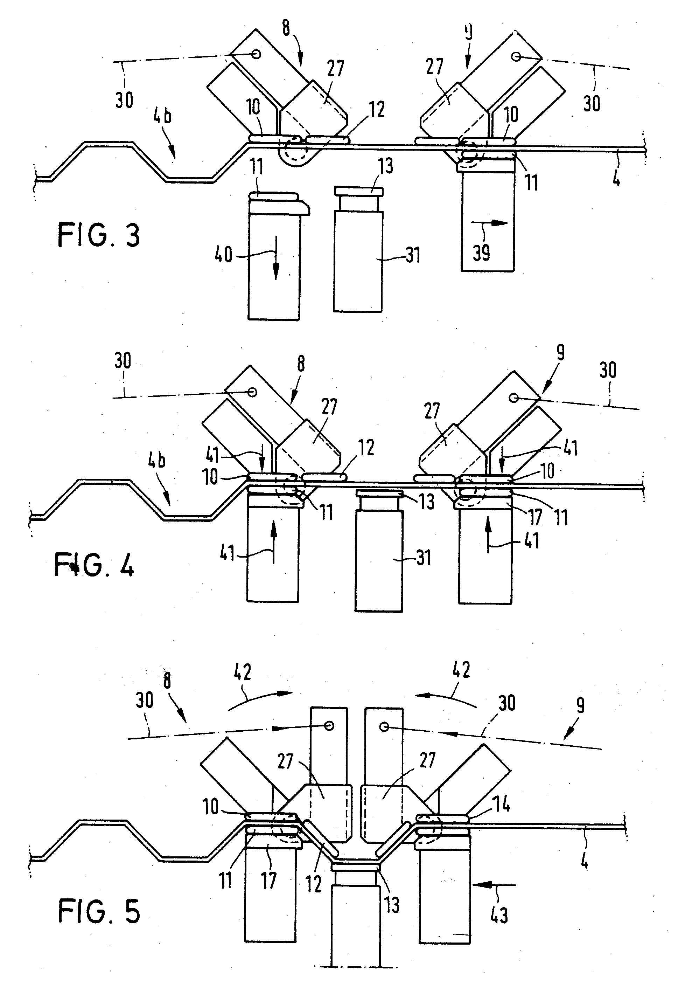

Figur 3 zeigt den Beginn eines Biegevorganges. Der zuletzt gebogene Abschnitt (4b) des Bandmaterials (4) ist nach links über die linke Klemm- und Biegeeinrichtung hinaus verfahren worden, so daß sich zwischen den beiden Klemm- und Biegeeinrichtungen (8 und 9) noch unverformtes Bandmaterial (4) befindet. Die rechte Klemmeinrichtung war zuvor in Richtung des Pfeiles (39) nach rechts verfahren worden, wobei die beiden Klemmbacken (10 und 11) nur geringfügig auseinandergefahren werden mußten. Die untere Klemmbacke (11) der linken Klemm- und Biegeeinrichtung (8) wurde hingegen um eine größere Strecke gemäß dem eingezeichneten Pfeil (40) nach unten gefahren, um ausreichend Raum zu schaffen, damit der zuletzt gebogene Abschnitt (4b) zwischen den Klemmbacken (10 und 11) der linken Klemm- und Biegeeinrichtung hindurch verschoben werden kann. Die Stützbacke (13) ist in der abgesenkten Position gezeigt. Die Biegebalken (27) befinden sich in der zurückgezogenen Position.

Bei der Darstellung aus Figur 4 sind die Klemmbacken (10 und 11) beider Klemm- und Biegeeinrichungen zusammengefahren und liegen unter Druck an dem nach wie vor unverformten Bandmaterial (4) an, wie durch Pfeile (41) angedeutet ist. Die Hubbalken (27) befinden sich noch in der neutralen oder zurückgezogenen Position, während die Stützbacke (13) in der angehobenen oder höchsten Lage gezeigt ist.

Figur 5 zeigt, in welcher Position sich die einzelnen Teile der Formeinrichtung am Ende eines Biegevorganges befinden. Die Klemmbacken (10 und 11) beider Klemm- und Biegeeinrichtungen (8 und 9) liegen nach wie vor unter Druck beidseits am Bandmaterial (4) an. Die Biegebalken (27) sind um deren Gelenke (28) mittels der ausgefahrenen Kolbenstangen (30) verschwenkt worden, was durch Pfeile (42) angedeutet ist, so daß die Biegebacken (12) sich nunmehr in einer schrägen Position befinden. Die Stützbacke (13) liegt während des gesamten Biegevorganges, auf der Unterseite des Bandmaterials (4) an, um ein Durchbiegen des Bandmaterials im mittleren Bereich zu verhindern. Die rechte Klemm- und Biegeeinrichtung (9) hat sich der linken Klemm- und Biegeeinrichtung (8) mit der Stützbacke (13) entsprechend der durch den Biegevorgang bedingten Verkürzung des trapezförmig ausgelenkten Bandmaterials zwischen den beiden Klemmbackenpaaren genähert, wie durch einen Pfeil (43) angedeutet ist.

Nach Beendigung des Biegevorganges kehren die einzelnen Teile der Formeinrichtung in die in Figur 3 gezeigte Position zurück, woraufhin der zwischen denselben befindliche gebogene Abschnitt nach links bis hinter die linke Klemm- und Biegeeinrichtung verschoben wird, damit ein neuer Biegevorgang beginnen kann.

## Patentansprüche

1. Vorrichtung zum Herstellen von Trägern für Bauzwecke oder dergleichen, mit wenigstens einem in Längsrichtung verlaufenden Gurt und einem an diesem fest angeordneten Steg, mit wenigstens zwei Coil-Abwickeleinrichtungen (3) und einer Formeinrichtung (2), mit der ein von einer Coil-Abwickeleinrichtung (3) zulaufendes Bandmaterial (4) schrittweise verformt und danach an ein anderes Band angeschweißt wird, wobei die Formeinrichtung zwei Festhalteeinrichtungen (8, 9) aufweist, von denen die in Vorschubrichtung des zu verformenden Bandmaterials (4) gesehen erste Festhalteeinrichtung (9) relativ verschiebbar zu der feststehenden zweiten Festhalteeinrichtung (8) gelagert ist und wobei beide Festhalteeinrichtungen (8, 9) je zwei aufeinander zu- und voneinander wegbewegbare Halteorgane (10, 11) aufweisen, welche das schrittweise zu verformende Bandmaterial (4) an zwei voneinander entfernten Stellen festhalten können, **dadurch gekennzeichnet**, daß jede Festhalteeinrichtung als Klemm- und Biegeeinrichtung (8, 9) zum Formen eines trapezförmigen Steges ausgestaltet ist, welche als Halteorgan plattenförmige Klemmbacken (10, 11) und je eine zugeordnete, plattenförmige angetriebene Biegebacke (12) aufweist, wobei je zwei Klemmbacken (10, 11) je einen Trapezabschnitt einklemmen und die zugeordneten Biegebacken (12) je einen der benachbarten und zwischen den eingeklemmten Trapezabschnitten liegenden Trapezabschnitte so abknickt, daß zwischen den abgeknickten Trapezabschnitter nach ein weiterer zu den eingeklemmten Trapezabschnitten paralleler Trapezabschnitt verbleibt, und daß den Biegebacken (12) beider Klemm- und Biegeeinrichtungen (8, 9) gegenüber und zwischen diesen eine Stützbacke (13) zugeordnet ist.

2. Vorrichtung nach Anspruch 2,
**dadurch gekennzeichnet**, daß die Stützbacke (13) etwa senkrecht zur Vorschubrichtung des zu verformenden Bandmaterials (4) verstellbar und einstellbar gelagert ist.

3. Vorrichtung nach Anspruch 1 oder 2,
**dadurch gekennzeichnet**, daß die Klemm- (10, 11) und Biegebacken (12) sowie die Stützbacke (13) abgerundete Kanten (14) zumindest an deren Stirnenden aufweisen.

4. Vorrichtung nach Anspruch 1 und 2, **dadurch gekennzeichnet**, daß über die Veränderung der Länge
des Verschiebeweges zwischen den beiden Klemm- und Biegeeinrichtungen (8, 9) die Querschnittsform der zu biegenden Trapezquerschnitte einstellbar ist.

5. Vorrichtung nach einem der Ansprüche 1 bis 4,
**dadurch gekennzeichnet**, daß die Klemm- (10, 11) und Biegebacken (12) sowie die Stützbacke (13) auswechselbar und/oder umsetzbar angeordnet sind.

## Claims

1. Apparatus for making structural beams or the like, comprising at least one boom extending in longitudinal direction and a web fixedly mounted thereto, comprising at least two uncoil means (3) and one shaping means (2), by means of which a band material (4) running in from an uncoil means (3) is gradually deformed and thereupon welded to another band, said shaping means comprising two securing means (8, 9), the first securing means (9) seen in advance direction of the band material to be deformed being carried in bearings displaceably with respect to the stationary second securing means (8) and both securing means (8, 9) comprising two holding elements (10, 11) reciprocating towards another and being capable to securely hold said band material which is gradually to be deformed at two remote positions, characterized in that each holding means is designed as a clamping and bending means (8, 9) for deforming a trapezoidal web, comprising as a holding element plate-shaped clamping jaws (10, 11) and for each one associated plate-shaped driven bending jaw (12), two clamping jaws (10, 11) clamping one trapezoidal portion each and the associated bending jaws (12) bending each one of the trapezoidal portions adjacent to and located between the clamped trapezoidal portions in such a way that another trapezoidal portion remains between the bent trapezoidal portions in parallel to the bent trapezoidal portions and that opposite to the bending jaws (12) of both clamping and bending means (8, 9) and between them a supporting jaw (13) is associated.

2. Apparatus as claimed in claim 1, characterized in that said supporting jaw (13) is, substantially vertically with respect to the advance direction of the band material to be deformed, relocatable and adjustable.

3. Apparatus as claimed in claim 1 or 2, characterized in that said clamping (10, 11) and bending (12) jaws as well as said supporting jaw (13) comprise rounded edges at least at the front ends thereof.

4. Apparatus as claimed in claim 1 or 2, characterized in that the cross-sectional shape of the trapezoidal portions to be bent is adjustable by varying the length of the shifting way between the two clamping and bending means (8, 9).

5. Apparatus as claimed in one of claims 1 to 4, characterized in that said clamping (10, 11) and bending (12) jaws as well as said supporting jaw (13) are arranged to be exchanged and/or transferred.

## Revendications

1. Appareil pour fabriquer des poutres de construction ou similaires, comprenant au moins une semelle s'étendant en longueur et une âme y montée fixe, comprenant au moins deux dispositifs coil-dérouleurs (3) et un dispositif de faconnage (2), avec lequel un feuillard (4) entrant d'un dispositif coil-dérouleur (3) est graduellement déformé et, après, soudé à un autre feuillard, ledit dispositif de faconner comprenant deux dispositifs de retenue (8, 9), le premier dispositif de retenue (9), vu en direction d'avance du feuillard à déformer, étant porté en paliers, déplacablement relatif au second dispositif de retenue (8) stationnaire, et les deux dispositifs de retenue (8, 9) comprenant deux organes à tenir (10, 11) qui vont et viennent l'un relatif à l'autre et sont capable de retenir fixe ledit feuillard à déformer graduellement à deux positions distantes l'une de l'autre,
caractérisé en ce que chaque dispositif de retenue est faconné comme un moyen de serrage et de pliage (8, 9) pour former une âme trapézoidale, ce moyen comprenant comme organe de retenue des mâchoires (10, 11) en forme de panneaux et pour chaque moyen une associée touche à plier (12) entraînée, en forme de panneau, chaque deux mâchoires serrent une portion trapézoidale et les touches à plier (12) plient chacune des portions trapézoidales en voisins et disposées entre les portions trapézoidales dans une manière que encore une autre portion trapézoidale, en parallèle aux portions trapézoidales enserrées, reste entre les portions trapézoidales courbées, et que une touche de support (13) est associée en opposition des touches (12) à plier des deux moyens de serrage et de pliage (8, 9) et entre eux.

2. Appareil selon la revendication 1, caracterisé en ce que la touche de support (13) est, environ en direction verticale à la direction d'avance du feuillard à déformer, déplacable et ajustable.

3. Appareil selon l'une des revendications 1 ou 2, caractérisé en ce que les mâchoires (10, 11) et les touches à plier (12) aussi bien que la touche de support (13) comprennent des arêtes arrondies au moins à leur face de front.

4. Appareil selon l'une des revendications 1 ou 2, caractérisé en ce que la forme de la coupe transversale des portions trapézoidales à plier est ajustable par varier la distance de deplacement entre les deux moyens de serrage et de pliage (8, 9).

5. Appareil selon l'une des revendications 1 à 4, caractérisé en ce que les mâchoires (10, 11) et les touches à plier (12) aussi bien que la touche de support (13) sont aménagées pour être échangées et/ou pour changer de place.
